# EUROPEAN PATENT APPLICATION

(11) **EP 4 513 724 A1**
(43) Date of publication of application: **26.02.2025**
(21) Application number: 24195847.9
(22) Date of filing: 22.08.2024
(51) Int. Cl.: H02K 7/14, H02K 1/2791, H02K 9/06, H02K 15/12, H02K 21/22

(54) **POWER TOOL INCLUDING A MOTOR WITH BLOWER FAN BLADES**

(30) Priority: 22.08.2023 US 202363578105 P
(71) Applicant: Milwaukee Electric Tool Corporation, Brookfield, WI 53005-2550 (US)
(72) Inventor: Gonzalez, Luis, Brookfield, 53005-2550 (US)
(74) Representative: Grünecker Patent- und Rechtsanwälte PartG mbB

(57) **Abstract**

A drive unit for a power tool that includes a motor and a blower assembly. The motor includes a rotor shaft, a stator, and a rotor. The rotor shaft extends along an axis of rotation. The stator is mounted to the rotor shaft. The rotor at least partially surrounds the stator. The rotor has a rotor core, a plurality of magnets, and an overmold housing that couples the plurality of magnets to the rotor core to form poles having more than one magnet per pole. The blower assembly includes a plurality of blower fan blades. The blower assembly is configured to be driven by the motor.

## Description

### FIELD

Embodiments described herein relate to a motor of a power tool.

### SUMMARY

Drive units for power tools described herein include a motor and a blower assembly. The motor includes a rotor shaft, a stator, and a rotor. The rotor shaft extends along an axis of rotation. The stator is mounted to the rotor shaft. The rotor at least partially surrounds the stator. The rotor has a rotor core, a plurality of magnets, and an overmold housing that couples the plurality of magnets to the rotor core to form poles having more than one magnet per pole. The blower assembly includes a plurality of blower fan blades. The blower assembly is configured to be driven by the motor.

Drive units for power tools described herein include a motor and a blower assembly. The motor includes a rotor, a stator, and a rotor. The rotor shaft extends along an axis of rotation. The stator is mounted to the rotor shaft. The rotor at least partially surrounds the stator. The rotor is configured to be driven by the stator. The rotor is coupled to the rotor shaft to drive rotation of the rotor shaft about the axis of rotation. The blower assembly includes a plurality of blower fan blades extending radially outward from an outer surface of the motor.

Methods of manufacturing a drive unit for a power tool described herein include providing a rotor shaft and a stator mounted to the rotor shaft, forming a rotor core, positioning the stator within the rotor core after the rotor core is formed, attaching the rotor core to the rotor shaft, and attaching a blower assembly to one of the rotor shaft and the rotor core.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other aspects of the embodiments will become apparent by consideration of the detailed description and accompanying drawings.

### BRIEF DESCRIPTION OF THE DRAWINGS

FIG. 1 illustrates a side view of a power tool in accordance with some embodiments.
FIG. 2 illustrates a block diagram of a control system of the power tool of FIG. 1 in accordance with some embodiments.
FIG. 3 illustrates a battery pack for use with the power tool of FIG. 1 in accordance with some embodiments.
FIG. 4 illustrates a block diagram of a control system of the battery pack of FIG. 3 in accordance with some embodiments.
FIG. 5 illustrates a drive unit including a motor and a blower assembly in accordance with some embodiments.
FIG. 6 illustrates a schematic of the motor of FIG. 5 in accordance with some embodiments.
FIG. 7A illustrates a schematic of laminations for the motor of FIG. 6 in accordance with some embodiments.
FIG. 7B illustrates another schematic of laminations for the motor of FIG. 6 in accordance with some embodiments.
FIG. 8 illustrates a schematic of a rotor core and magnets for the motor of FIG. 6 in accordance with some embodiments.
FIG. 9 illustrates a cross-sectional view of a rotor shaft, a rotor, magnets, and a motor fan for the drive unit of FIG. 5 in accordance with some embodiments.
FIG. 10 illustrates a method of manufacturing the drive unit of FIG. 5 in accordance with some embodiments.
FIG. 11 illustrates a drive unit including a motor and a blower assembly in accordance with some embodiments.
FIG. 12 illustrates a perspective view of a rotor core, magnets, and a housing for the motor of FIG. 11 in accordance with some embodiments.
FIG. 13 illustrates a schematic of a rotor core, magnets, and a housing for the motor of FIG. 11 in accordance with some embodiments.
FIG. 14 illustrates a method of manufacturing the drive unit of FIG. 11 in accordance with some embodiments.
FIG. 15 illustrates a motor fan according to some embodiments.
FIG. 16 illustrates an end cap for a motor according to some embodiments.
FIG. 17 illustrates a rotor core and magnets according to some embodiments.
FIG. 18 is a graphical representation of efficiency, electrical current, and speed operating curves of various motors in accordance with some embodiments.
FIG. 19 illustrates a motor implemented within a power tool according to some embodiments.

### DETAILED DESCRIPTION

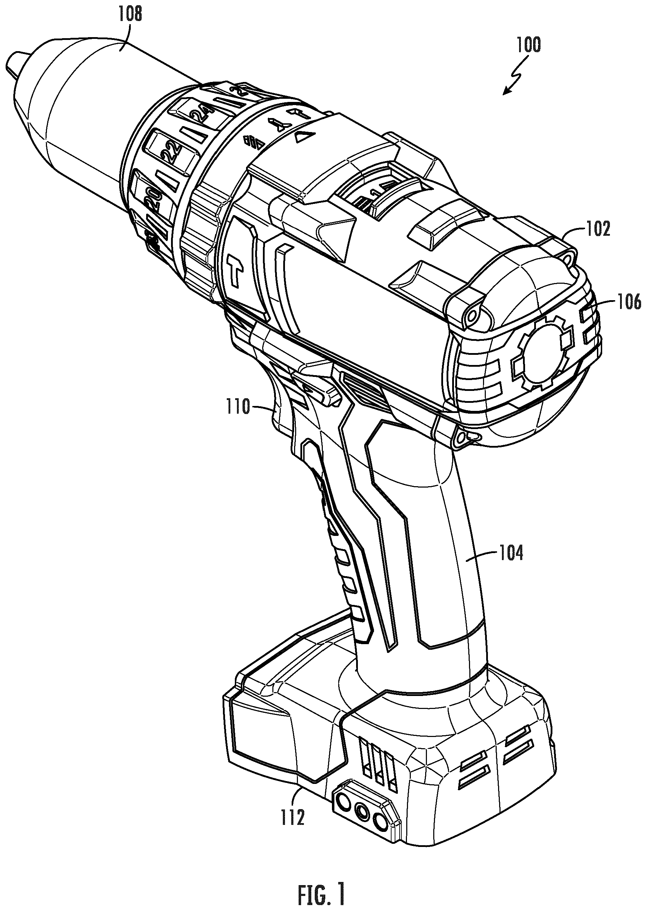

FIG. 1 illustrates a power tool 100 including a drive unit having an outer rotor motor. The power tool 100 is, for example, a hammer drill including a housing 102. In other embodiments, the power tool 100 can be any other type of power tool that includes a motor, such as a blower. The housing 102 includes a handle portion 104 and motor housing portion 106. The power tool 100 further includes an output driver 108 (illustrated as a chuck), a trigger 110, and a battery pack interface 112. The battery pack interface 112 is configured to mechanically and electrically connect to or receive a power tool battery pack. Although FIG. 1 illustrates a hammer drill, in some embodiments, the components described herein are incorporated into other types of power tools including drill-drivers, impact drivers, impact wrenches, sanders, angle grinders, circular saws, reciprocating saws, plate compactors, core drills, string trimmers, blowers, vacuums, and the like. In an outer rotor motor power tool, such as power tool 100, switching elements are selectively enabled and disabled by control signals from a controller to selectively apply power from a power source (e.g., battery pack) to drive an outer rotor motor.

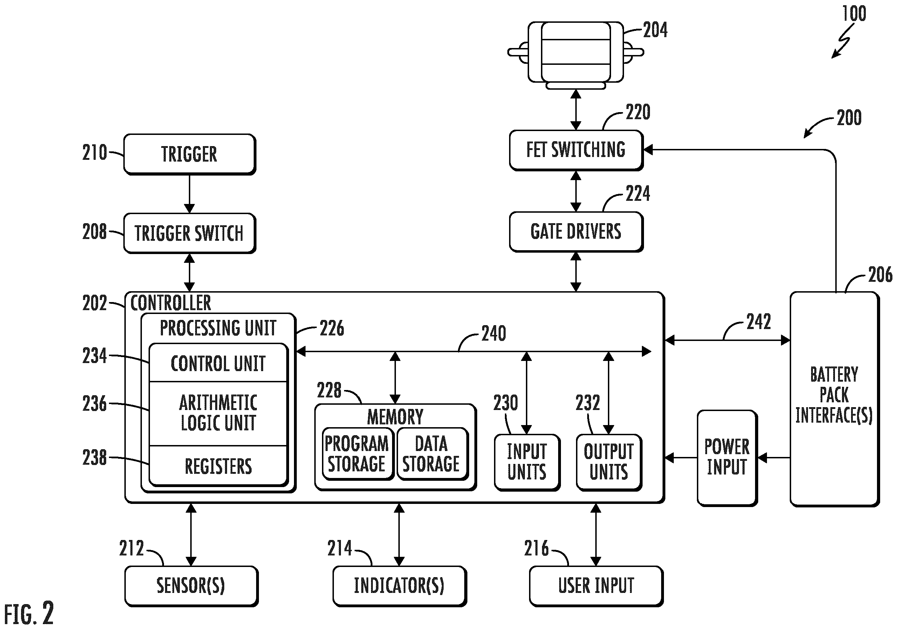

FIG. 2 illustrates a control system 200 for the power tool 100. The control system 200 includes a controller 202. The controller 202 is electrically and/or communicatively connected to a variety of modules or components of the power tool 100. For example, the illustrated controller 202 is electrically connected to a motor 204, a battery pack interface 206, a trigger switch 208 (connected to a trigger 210), one or more sensors or sensing circuits 212, one or more indicators 214, a user input module 216, a power input module 218, an inverter bridge or FET switching module 220 (e.g., including a plurality of switching FETs), and gate drivers 224 for driving the FET switching module 220. In some embodiments, the motor 204 is an outer rotor motor. The controller 202 includes combinations of hardware and software that are operable to, among other things, control the operation of the power tool 100, monitor the operation of the power tool 100, activate the one or more indicators 214 (e.g., an LED), etc.

The controller 202 includes a plurality of electrical and electronic components that provide power, operational control, and protection to the components and modules within the controller 202 and/or the power tool 100. For example, the controller 202 includes, among other things, a processing unit 226 (e.g., a microprocessor, a microcontroller, an electronic controller, an electronic processor, or another suitable programmable device), a memory 228, input units 230, and output units 232. The processing unit 226 includes, among other things, a control unit 234, an arithmetic logic unit ("ALU") 236, and a plurality of registers 238, and is implemented using a known computer architecture (e.g., a modified Harvard architecture, a von Neumann architecture, etc.). The processing unit 226, the memory 228, the input units 230, and the output units 232, as well as the various modules or circuits connected to the controller 202 are connected by one or more control and/or data buses (e.g., common bus 240). The control and/or data buses are shown generally in FIG. 2 for illustrative purposes. The use of one or more control and/or data buses for the interconnection between and communication among the various modules, circuits, and components would be known to a person skilled in the art in view of the invention described herein.

The memory 228 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 226 is connected to the memory 228 and executes software instructions that are capable of being stored in a RAM of the memory 228 (e.g., during execution), a ROM of the memory 228 (e.g., on a generally permanent basis), or another non-transitory computer readable medium such as another memory or a disc. Software included in the implementation of the power tool 100 can be stored in the memory 228 of the controller 400. The software includes, for example, firmware, one or more applications, program data, filters, rules, one or more program modules, and other executable instructions. The controller 202 is configured to retrieve from the memory 228 and execute, among other things, instructions related to the control processes and methods described herein. In other constructions, the controller 202 includes additional, fewer, or different components.

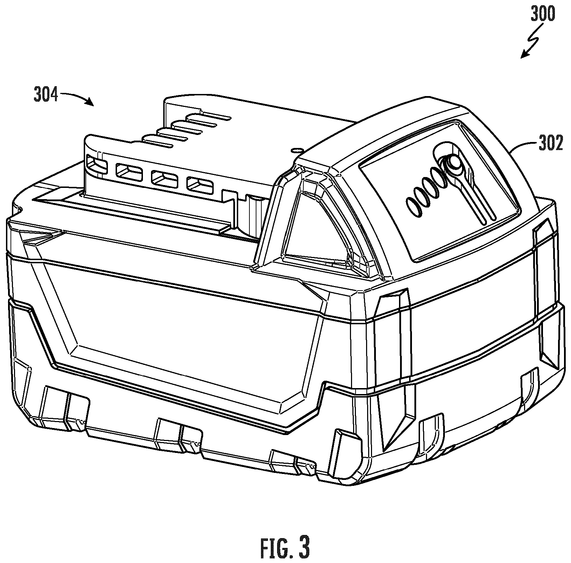

The battery pack interface 206 includes a combination of mechanical components (e.g., rails, grooves, latches, etc.) and electrical components (e.g., one or more terminals) configured to and operable for interfacing (e.g., mechanically, electrically, and communicatively connecting) with a battery pack. For example, power provided by a battery pack 300 (see FIG. 3) to the power tool 100 is provided through the battery pack interface 206 to the power input module 218. The power input module 218 includes combinations of active and passive components to regulate or control the power received from the battery pack 300 prior to power being provided to the controller 202. The battery pack interface 206 also supplies power to the FET switching module 220 to be switched by the switching FETs to selectively provide power to the motor 204. The battery pack interface 206 also includes, for example, a communication line 242 for providing a communication line or link between the controller 202 and the battery pack 300.

The sensors 212 include one or more current sensors, one or more speed sensors, one or more Hall effect sensors, one or more temperature sensors, etc. The indicators 214 include, for example, one or more light-emitting diodes ("LEDs"). The indicators 214 can be configured to display conditions of, or information associated with, the power tool 100. For example, the indicators 214 are configured to indicate measured electrical characteristics of the power tool 100, the status of the power tool, the status the motor 204, etc. The user input module 216 is operably coupled to the controller 202 to, for example, select a forward mode of operation or a reverse mode of operation, a torque and/or speed setting for the power tool 100 (e.g., using torque and/or speed switches), etc. In some embodiments, the user input module 216 includes a combination of digital and analog input or output devices required to achieve a desired level of operation for the power tool 100, such as one or more knobs, one or more dials, one or more switches, one or more buttons, etc.

FIG. 3 illustrates a battery pack 300. The battery pack 300 includes a housing 302 and an interface portion 304 for connecting the battery pack 300 to a power tool, such as the power tool 100.

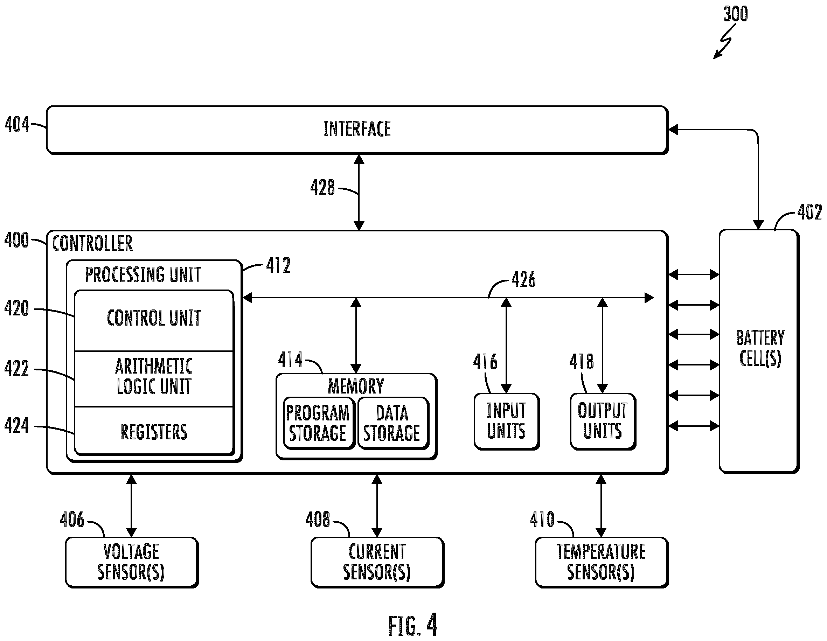

FIG. 4 illustrates a control system for the battery pack 300. The control system includes a controller 400. The controller 400 is electrically and/or communicatively connected to a variety of modules or components of the battery pack 300. For example, the illustrated controller 400 is connected to one or more battery cells 402 and an interface 404 (e.g., the interface portion 304 of the battery pack 300 illustrated in FIG. 3). The controller 400 is also connected to one or more voltage sensors or voltage sensing circuits 406, one or more current sensors or current sensing circuits 408, and one or more temperature sensors or temperature sensing circuits 410. The controller 400 includes combinations of hardware and software that are operable to, among other things, control the operation of the battery pack 300, monitor a condition of the battery pack 300, enable or disable charging of the battery pack 300, enable or disable discharging of the battery pack 300, etc.

The controller 400 includes a plurality of electrical and electronic components that provide power, operational control, and protection to the components and modules within the controller 400 and/or the battery pack 300. For example, the controller 400 includes, among other things, a processing unit 412 (e.g., a microprocessor, a microcontroller, an electronic processor, an electronic controller, or another suitable programmable device), a memory 414, input units 416, and output units 418. The processing unit 412 includes, among other things, a control unit 420, an ALU 422, and a plurality of registers 424, and is implemented using a known computer architecture (e.g., a modified Harvard architecture, a von Neumann architecture, etc.). The processing unit 412, the memory 414, the input units 416, and the output units 418, as well as the various modules or circuits connected to the controller 400 are connected by one or more control and/or data buses (e.g., common bus 426). The control and/or data buses are shown generally in FIG. 4 for illustrative purposes. The use of one or more control and/or data buses for the interconnection between and communication among the various modules, circuits, and components would be known to a person skilled in the art in view of the invention described herein.

The memory 414 is a non-transitory computer readable medium and includes, for example, a program storage area and a data storage area. The program storage area and the data storage area can include combinations of different types of memory, such as a ROM, a RAM (e.g., DRAM, SDRAM, etc.), EEPROM, flash memory, a hard disk, an SD card, or other suitable magnetic, optical, physical, or electronic memory devices. The processing unit 412 is connected to the memory 414 and executes software instructions that are capable of being stored in a RAM of the memory 414 (e.g., during execution), a ROM of the memory 414 (e.g., on a generally permanent basis), or another non-transitory computer readable medium such as another memory or a disc. Software included in the implementation of the battery pack 300 can be stored in the memory 414 of the controller 400. The software includes, for example, firmware, one or more applications, program data, filters, rules, one or more program modules, and other executable instructions. The controller 400 is configured to retrieve from the memory 414 and execute, among other things, instructions related to the control processes and methods described herein. In other constructions, the controller 400 includes additional, fewer, or different components.

The interface 404 includes a combination of mechanical components (e.g., rails, grooves, latches, etc.) and electrical components (e.g., one or more terminals) configured to and operable for interfacing (e.g., mechanically, electrically, and communicatively connecting) the battery pack 300 with another device (e.g., a power tool, a battery pack charger, etc.). For example, the interface 404 is configured to communicatively connect to the controller 400 via a communications line 428.

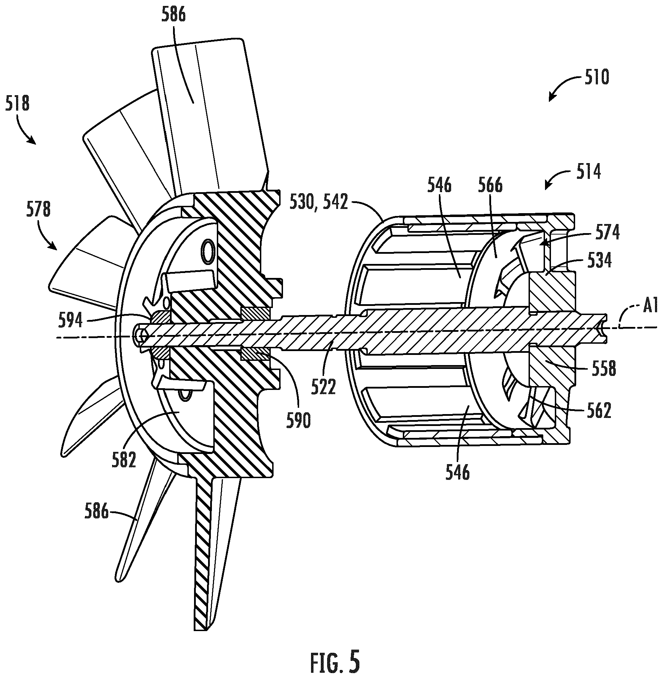

FIG. 5 illustrates a drive unit 510 according to an embodiment of the disclosure. The drive unit 510 includes a motor assembly or a motor 514 and a blower assembly 518. The motor 514 is a brushless direct current ("BLDC") outer rotor motor and is configured to rotate under control of a controller (e.g., the controller 202 of FIG. 2) in response to user input, such as actuation of a trigger (e.g., the trigger 110 of FIG. 1). The motor 514 is configured to drive a working operation of a power tool (e.g., the power tool 100 of FIG. 1). The blower assembly 518 is coupled to the motor 514 such that the motor 514 drives rotation of the blower assembly 518. The blower assembly 518 may be configured to induce a flow of air out of (e.g., blown out of) the power tool. The blower assembly 518 may also be configured to suction a flow of air into (e.g., vacuumed into) the power tool. Further, airflow induced by the blower assembly 518 may be used for cooling internal components of the power tool, such as the motor 514.

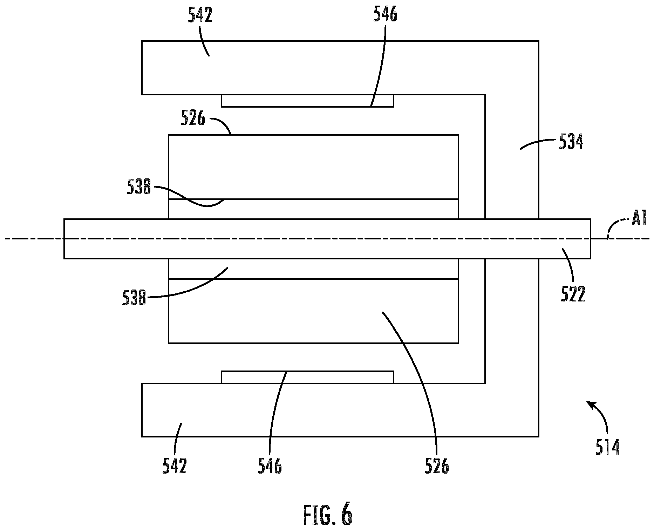

With reference to FIGS. 5 and 6, the motor 514 includes a rotor shaft 522, a stator 526, a rotor 530, and a motor fan 534. The motor 514 is an outer rotor motor such that the stator 526 is at least partially surrounded by the rotor 530. The rotor shaft 522 extends along and is configured to rotate about a motor axis A1. The rotor shaft 522 may be engaged with a transmission (not shown) of the power tool to drive a working operation. The stator 526 is mounted to the rotor shaft 522 and may be supported by the housing (e.g., the housing 102 of FIG. 1) of the power tool such that the rotor shaft 522 is configured to rotate relative to the stator 526. As such, the stator 526 may be mounted to the rotor shaft 522 with a bushing or a bearing 538 that reduces friction between the stator 526 and the rotor shaft 522 to improve the ease with which the rotor shaft 522 can rotate relative to the stator 526. The stator 526 includes a plurality of windings (not shown) that may be energized under control of the controller 202 to induce rotation of the rotor 530. In the illustrated embodiment, the rotor 530 is mounted to the rotor shaft 522 through the motor fan 534 such that rotation of the rotor 530 drives rotation of the rotor shaft 522 via the motor fan 534.

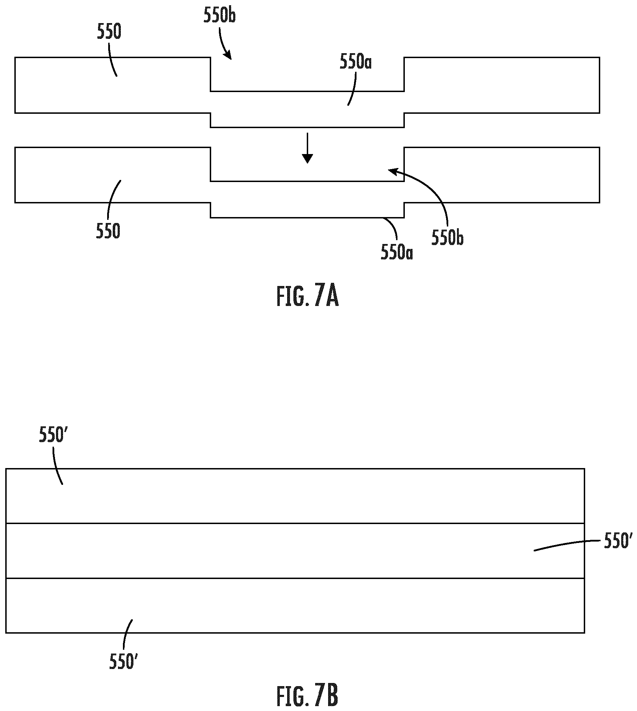

The rotor 530 includes a rotor core 542 and a plurality of magnets 546 coupled to the rotor core 542. In the illustrated embodiment, with reference to FIGS. 6 and 7A, the rotor core 542 is formed of a plurality of laminations 550 that are secured together to form a substantially hollow cylindrical body. As such, the stator 526 is positioned within the substantially hollow cylindrical body formed by the laminations 550. The laminations 550 may be interlocked together to form the body of the rotor core 542. Specifically, the laminations 550 include a protruding portion 550a, and the protruding portion 550a is configured to be inserted into a gap 550b formed by the protruding portion 550a of an adjacent lamination 550 to interlock the laminations 550 together. In some embodiments, as illustrated in FIG. 7B, laminations 550' may be glued together. That is, each lamination 550' may be glued directly to one or two adjacent lamination(s) 550'. As such, each lamination 550' may be positioned face-to-face with adjacent laminations 550'. In further embodiments, the rotor core 542 may be machined to form a machined core. That is, for example, the rotor core 542 may be die-cast to form a uniform body of the rotor core 542. In yet further embodiments, the rotor core 542 may be a powder metallurgy core. That is, the rotor core 542 may be formed from a powder metallurgy process in which powdered metal is sintered together to form a uniform body of the rotor core 542.

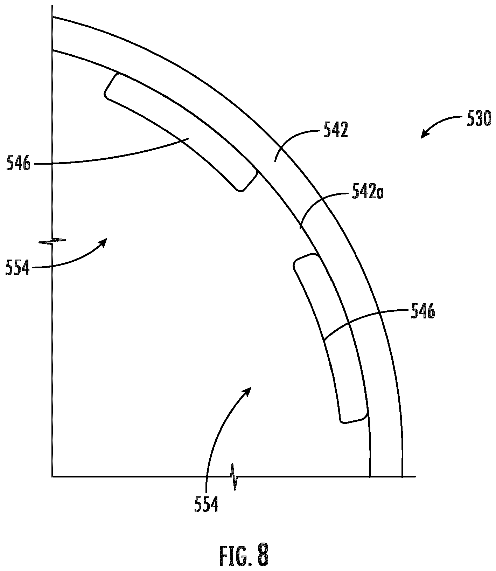

With reference to FIG. 8, the magnets 546 are coupled to the rotor core 542 to form, or create, a plurality of rotor poles 554 on the rotor core 542. In the illustrated embodiment, the magnets 546 are glued to an inner peripheral surface 542a of the rotor core 542, and each of the plurality of rotor poles 554 includes a single magnet 546. The magnets 546 are arcuate such that the magnets 546 fit directly to the inner peripheral surface 542a of the rotor core 542. That is, the magnets 546 may extend along an arc that has the same curvature as the inner peripheral surface 542a of the rotor core 542. With reference to FIGS. 6 and 8, with the magnets 546 coupled to the inner peripheral surface 542a of the rotor core 542, the magnets 546 face the stator 526, and are configured to be magnetically engaged by the stator windings (not shown) to induce rotation of the rotor 530. A motor with single magnet poles 554 may be advantageously used in power tools with applications in which high rotation speed is desired because single magnet poles 554 enable a faster rotation speed for the motor 514 than poles with multiple magnets. As such, single magnet poles 554 may be advantageously used in motors of power tools such as blowers, sanders, grinders, and other similar tools in which rotation speed is preferable over output torque.

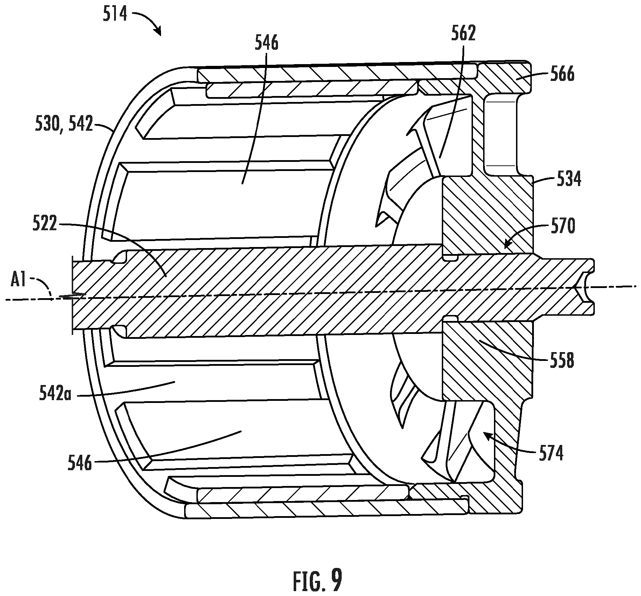

As illustrated in FIG. 9, the motor fan 534 may be press-fit or snap-fit to a rear end of the rotor core 542 such that the motor fan 534 is coupled for rotation with the rotor core 542. In some embodiments, the motor fan 534 is integrally molded with an overmold of the rotor 530. The motor fan 534 is also mounted to the rotor shaft 522. As such, as the rotor 530 rotates, the rotor 530 drives rotation of the motor fan 534 which drives rotation of the rotor shaft 522. Rotation of the motor fan 534 induces a cooling airflow that travels through the motor 514 to cool the rotor shaft 522, the stator 526 (FIG. 6), the rotor 530, and the controller 202.

In the illustrated embodiment, with reference to the FIG. 9, the motor fan 534 includes a hub 558, a plurality of fan blades 562, and a side wall 566. The hub 558, the plurality of fan blades 562, and the side wall 566 are all formed together through molding. The hub 558 includes an aperture 570 for mounting the motor fan 534 to the rotor shaft 522. As such, the motor axis A1 extends through a center of the aperture 570, and thus, a center of the hub 558. In the illustrated embodiment, the hub 558 is mounted directly to the rotor shaft 522 to drive rotation of the rotor shaft 522. In other embodiments, the hub 558 may be mounted to the rotor shaft 522 with a bearing or a bushing. The fan blades 562 are equally spaced around the hub 558 and extend between the hub 558 and the side wall 566. As such, the fan blades 562 define air gaps 574 between adjacent fan blades 562 to allow cooling airflow to pass therethrough. The side wall 566 is press-fit to the rotor core 542 to couple the motor fan 534 to the rotor core 542 for rotation with the rotor core 542.

In the illustrated embodiment, the motor fan 534 is an axial flow fan such that the motor fan 534 is configured to induce an axial flow of cooling air from behind the motor 514 and blow the air through the motor 514 to cool the rotor shaft 522, the stator 526, the rotor 530, and the controller 202. In other embodiments, the motor fan 534 may be a centrifugal fan such that the motor fan 534 suctions an axial flow of cooling air from in front of the motor 514 and induces the flow of cooling air to flow past the rotor shaft 522, the stator 526, the rotor 530, and the controller. Once the air reaches the motor fan 534, the motor fan 534 may exhaust the cooling air radially outward from the motor fan 534.

Returning reference to FIG. 5, the blower assembly 518 includes a blower fan 578 having a blower fan hub 582, and a plurality of blower fan blades 586. In the illustrated embodiment, the blower fan hub 582 is mounted to the rotor shaft 522 with a bushing 590 that is insert-molded directly into the blower fan hub 582. In other embodiments, the rotor shaft 522 may be knurled and directly pressed in the blower fan hub 582. The blower fan 578 is mounted to the rotor shaft 522 on a front side of the motor 514. However, the blower fan 578 may be mounted to the rotor shaft 522 on a rear side of the motor 514. The blower fan blades 586 extend radially away from the blower fan hub 582. Further, the blower fan blades 586 extend between a front side of the blower fan hub 582 and a rear side of the blower fan hub 582 at an angle. That is, the blower fan blades 586 do not extend along a shortest path between the front side of the blower fan hub 582 and the rear side of the blower fan hub 582. In the illustrated embodiment, the blower fan blades 586 are integrally molded with the blower fan hub 582. In other embodiments, the blower fan blades 586 may be separately formed and attached to the blower fan hub 582.

The blower assembly 518 further includes a lock ring 594 mounted to the rotor shaft 522 that locks the axial position of the blower fan 578 relative to the rotor shaft 522. Specifically, the lock ring 594 is fixed relative to the rotor shaft 522 such that the lock ring 594 inhibits the blower assembly 518 from sliding along the rotor shaft 522. In some embodiments, the lock ring 594 may be integrally formed on the rotor shaft 522. In other embodiments, the lock ring 594 may be fixedly attached to the rotor shaft 522. In further embodiments, the blower assembly 518 may include a lock ring 594 on each side of the blower fan 578. In other embodiments, the rotor shaft 522 may be threaded, and the blower assembly 518 may include a nut that threads onto the rotor shaft 522 for locking the axial position of the blower fan 578 relative to the rotor shaft 522. In such embodiments, the blower fan 578 may be adjustable along the rotor shaft 522 by adjusting a position of the nut along threads of the rotor shaft 522.

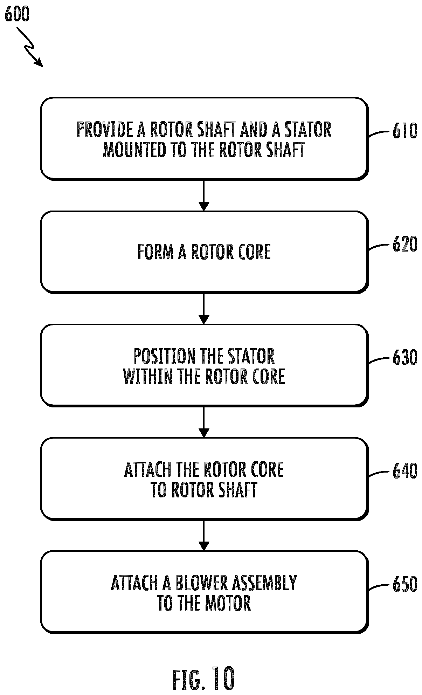

FIG. 10 illustrates a method 600 of manufacturing the drive unit of FIG. 5. Although steps of the method 600 are disclosed herein in a specific order, it is understood that the steps are not required to be completed in the order disclosed herein unless specified otherwise.

With reference to FIGS. 6 and 10, at step 610, the method 600 includes providing the rotor shaft 522 and the stator 526 mounted to the rotor shaft 522. Step 620 includes forming a rotor core 542. In the illustrated embodiment, with reference to FIGS. 7A and 10, the step 620 includes providing a plurality of laminations 550, forming the protruding portion 550a in each of the laminations 550, and stacking the laminations 550 together such that the protruding portion 550a of each lamination 550 extends into the gap 550b formed by the protruding portion 550a of an adjacent lamination 550. In other embodiments, the step 620 may include gluing the laminations 550 together in a face-to-face orientation such that the faces of each lamination 550 are glued to a face of an adjacent lamination 550. In further embodiments, the step 620 may include machining the rotor core 542 by, for example, die-casting the rotor core 542. In yet further embodiments, the step 620 may include forming the rotor core 542 from a powder metallurgy process in which powdered metal may be sintered together to form the rotor core 542.

Once the body of the rotor core 542 is formed, the plurality of magnets 546 may be attached to the inner peripheral surface 542a of the body. Specifically, the magnets 546 may be glued to an inner peripheral surface 542a of the body. In the illustrated embodiment, attaching the magnets 546 to the body of the rotor core 542 forms magnet poles 554 on the rotor core 542.

Step 630 includes positioning the stator 526 within the rotor core 542. Specifically, the step 630 includes positioning the stator 526 such that the rotor core 542 surrounds at least a portion of the stator 526. Step 640 includes attaching the rotor core 542 to the rotor shaft 522. In the illustrated embodiment, the step 640 includes attaching the motor fan 534 to the rotor core 542 with a press-fit between the rear end of the rotor core 542 and the forward end of the side wall 566 of the motor fan 534 and mounting the hub 558 of the motor fan 534 to the rotor shaft 522. In some embodiments, the step 640 may include attaching an end cap to the rotor core 542 and mounting the end cap to the rotor shaft 522.

Step 650 includes attaching the blower assembly 518 to the motor 514. In the illustrated embodiment, the step 650 includes insert-molding the bushing 590 on the blower fan 578 and mounting the blower fan 578 to the rotor shaft 522. The step 650 further includes mounting the lock ring 594 to one of the rotor shaft 522 and the blower fan 578 such that the lock ring 594 engages a shoulder on the other of the rotor shaft 522 and the blower fan 578 to inhibit the blower fan 578 from moving along the rotor shaft 522. In other embodiments, the step 650 may include knurling the rotor shaft 522 and press-fitting the blower fan 578 to a knurled portion of the rotor shaft 522. In further embodiments, the step 650 may include providing a rotor shaft 522 with a threaded portion and screwing a nut onto the threaded portion to engage the blower fan 578 and inhibit the blower fan 578 from sliding along the rotor shaft 522. Once the drive unit 510 is assembled, the method 600 may further include mounting the drive unit 510 within a power tool.

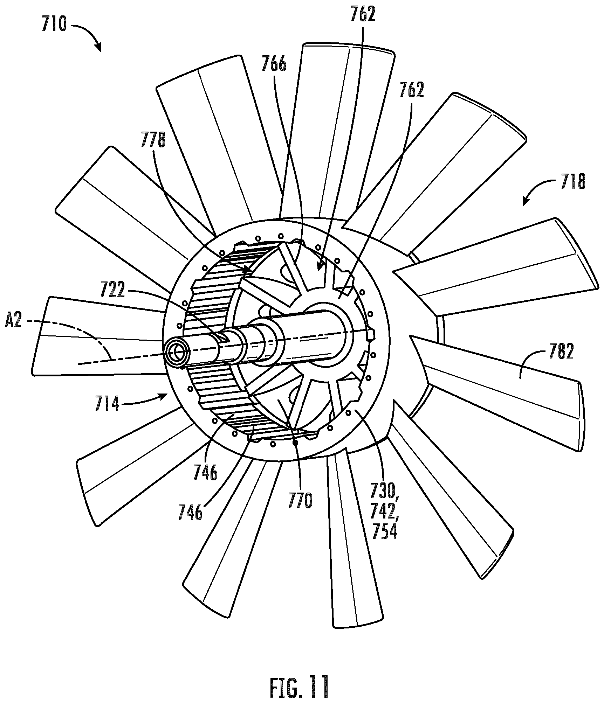

FIG. 11 illustrates a drive unit 710 according to other embodiments of the disclosure. The drive unit 710 includes a motor assembly or a motor 714 and a blower assembly 718. The motor 714 is a brushless direct current ("BLDC") outer rotor motor and is configured to rotate under control of a controller (e.g., the controller 202 of FIG. 2) in response to user input, such as actuation of a trigger (e.g., the trigger 110 of FIG. 1). The motor 714 is configured to drive a working operation of a power tool (e.g., the power tool 100 of FIG. 1). The blower assembly 718 is coupled to the motor 714 such that the motor 714 drives rotation of the blower assembly 718. The blower assembly 718 is configured to induce a flow of air out of (e.g., blown out of) the power tool. The blower assembly 718 may also be configured to suction a flow of air into (e.g., vacuumed into) the power tool. Further, the airflow induced by the blower assembly 718 may also be used for cooling internal components of the power tool.

The motor 714 may be substantially the same as the motor 514 of FIG. 6 except for the differences described herein. As such, with reference to FIG. 11, the motor 714 is an outer rotor motor including a rotor shaft 722, a stator (e.g., the stator 526 of FIG. 6), a rotor 730, and a motor fan 734. The rotor shaft 722 extends along a motor axis A2 and may be engaged with a transmission (not shown) of the power tool to drive a working operation. The stator may be energized under control of the controller to induce rotation of the rotor 730. The rotor 730 is mounted to the rotor shaft 722 through the motor fan 734 such that rotation of the rotor 730 drives rotation of the rotor shaft 722. Specifically, the motor fan 734 is integrally molded with the rotor 730 in the illustrated embodiment.

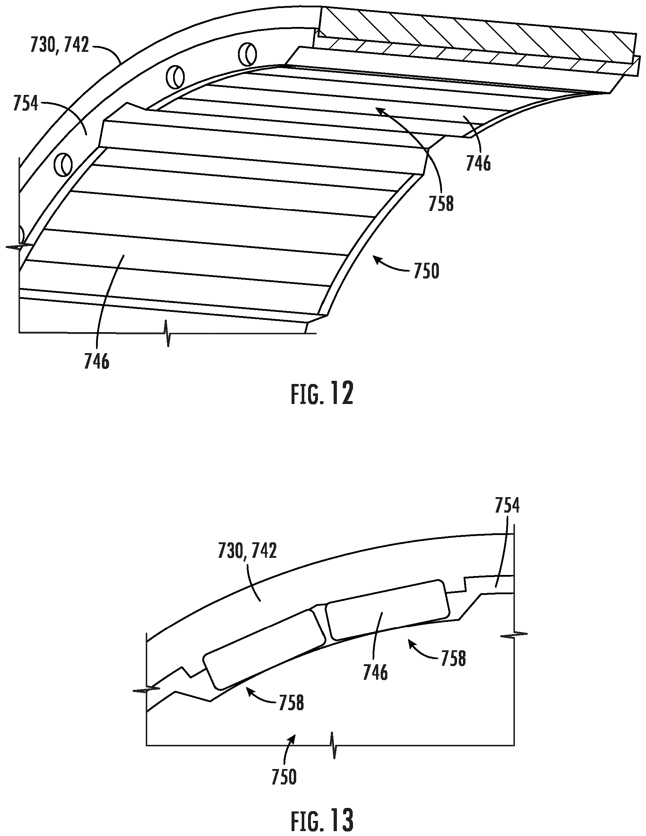

As illustrated in FIGS. 12 and 13, the rotor 730 includes a rotor core 742 and a plurality of magnets 746. The rotor core 742 may be formed through any of the processes described above with respect to the rotor core 542 of FIGS. 5-7B. The magnets 746 are coupled to the rotor core 742 to form, or create, a plurality of rotor poles 750 on the rotor core 742. In the illustrated embodiment, the magnets 746 are coupled to the rotor core 742 through an overmolding process that produces an overmold housing 754. In the illustrated embodiment, each of the rotor poles 750 includes multiple magnets 746. Specifically, each of the rotor poles 750 includes two magnets 746. As such, the overmold housing 754 holds two magnets 746 together at each rotor pole 750 and secures each of the plurality of magnets 746 relative to the rotor core 742. Further, the overmold housing 754 defines windows or openings 758 at an inward face of each of the magnets 746 (i.e., a face of the magnet 746 opposite from the rotor core 742) that exposes at least a portion of the magnets 746 to the stator for magnetic engagement with the stator. A motor 714 having poles 750 with multiple magnets 746 may be advantageously used in power tools with applications in which a high output torque is desired because poles 750 with multiple magnets 746 enable higher torque output than single magnet poles. As such, poles 750 with multiple magnets 746 may be advantageously used in motors of power tools such as rotary tools, rotary impact tools, and other similar tools in which high torque output is preferable over rotation speed. In some embodiments, the magnets 746 may be coupled to the rotor core 742 through an overmolding process that forms an overmold housing supporting rotor poles with just a single magnet.

Returning reference to FIG. 11, the motor fan 734 includes a hub 762, a plurality of fan blades 766, and a side wall 770. The hub 762, the plurality of fan blades 766, and the side wall 770 are all formed together through molding. The hub 762 includes an aperture for mounting the motor fan 734 to the rotor shaft 722. As such, the motor axis A2 extends through a center of the aperture, and thus, a center of the hub 762. In the illustrated embodiment, the hub 762 is mounted directly to the rotor shaft 722 to drive rotation of the rotor shaft 722. In other embodiments, the hub 762 may be mounted to the rotor shaft 722 with a bearing or a bushing. The fan blades 766 are equally spaced around the hub 762 and extend between the hub 762 and the side wall 770. As such, the fan blades 766 define air gaps 778 between adjacent fan blades 766 to allow cooling airflow to pass therethrough. The side wall 770 is integrally molded with the overmold housing 754 such that the motor fan 734 may be formed onto the rotor core 742 at the same time as the overmold housing 754. Alternatively, the motor fan 734 may be formed and attached (e.g., through overmolding) to the overmold housing 754 after the overmold housing 754 is formed.

With reference to FIG. 11, the blower assembly 718 includes a plurality of blower fan blades 782. In the illustrated embodiment, the plurality of blower fan blades 782 are overmolded with the overmold housing 754 of the rotor core 742. The blower fan blades 782 may be overmolded directly with the overmold housing 754 through a single overmolding process in which the overmold housing 754 and the blower fan blades 782 are formed at the same time. Alternatively, the overmold housing 754 may be formed through a first overmolding process, and the blower fan blades 782 may be formed and attached to the overmold housing 754 through a second or subsequent overmolding processes after the first overmolding process is complete.

In some embodiments, the blower fan blades 782 may be attached to the overmold housing 754 of the rotor core 742 through a different means than overmolding. For example, the blower fan blades 782 may be snap-fit to the overmold housing 754. That is, the overmold housing 754 may include grooves or another similar feature compatible to the receive the blower fan blades 782 in snap-fit engagement. In another example, the blower assembly 718 may include fasteners, such as screws, to fasten each of the blower fan blades 782 to the overmold housing 754. In a further example, the blower fan blades 782 may be press-fit to the overmold housing 754. In another example, the blower fan blades 782 may be glued to the overmold housing 754. In yet another example, the blower fan blades 782 may be ultrasonically plastic welded to the overmold housing 754.

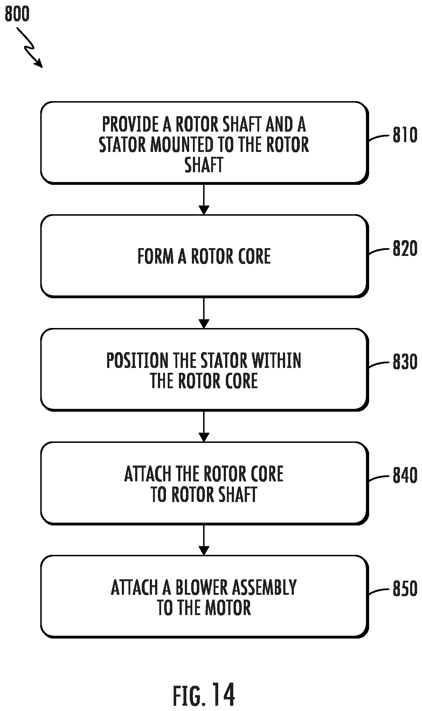

FIG. 14 illustrates a method 800 of manufacturing the drive unit 710 of FIG. 11. Although steps of the method 800 are disclosed herein in a specific order, it is understood that the steps are not required to be completed in the order disclosed herein unless specified otherwise.

With reference to FIGS. 11 and 14, at step 810, the method 800 includes providing the rotor shaft 722 and the stator mounted to the rotor shaft 722. Step 820 includes forming a rotor core 742. In the illustrated embodiment, similar to step 620 of the method 600 of FIG. 10, the step 820 includes providing a plurality of laminations, forming the protruding portion in each of the laminations, and stacking the laminations together such that the protruding portion of each lamination extends into a gap formed by the protruding portion of an adjacent lamination. In other embodiments, the step 820 may include gluing the laminations together in a face-to-face orientation such that the faces of each lamination are glued to a face of an adjacent lamination. In further embodiments, the step 820 may include machining the rotor core 742 by, for example, die-casting the rotor core 742. In yet further embodiments, the step 820 may include forming the rotor core 742 from a powder metallurgy process in which powdered metal may be sintered together to form the rotor core 742.

Once the body of the rotor core 742 is formed, the plurality of magnets 746 may be attached to rotor core 742. Specifically, the magnets 746 and the body of the rotor core 742 may be overmolded to form the overmold housing 754 that secures the magnets 746 relative to the rotor core 742. In the illustrated embodiment, the overmold housing 754 forms poles 750 with two magnets 746 each. In other embodiments, the overmold housing 754 may form poles with greater or fewer magnets.

In the illustrated embodiment, forming the overmold housing 754 may also include forming the motor fan 734. That is, the motor fan 734 may be formed as the rotor core 742 is overmolded with the magnets 746 such that the motor fan 734 and the overmold housing 754 are formed as a unitary body. In other embodiments, the overmold housing 754 and the motor fan 734 may be formed through separate molding processes and then be molded together to attach the motor fan 734 to the rotor core 742.

Step 830 includes positioning the stator within the rotor core 742. Specifically, the step 830 includes positioning the stator such that the rotor core 742 surrounds at least a portion of the stator. Step 840 includes attaching the rotor core 742 to the rotor shaft 722. In the illustrated embodiment, the step 840 includes mounting the hub 762 of the motor fan 734 to the rotor shaft 722. In other embodiments, the step 840 may include attaching an end cap to the rotor core 742 and mounting the end cap to the rotor shaft 722.

Step 850 includes attaching the blower assembly 718 to the motor 714. In the illustrated embodiment, the step 850 may be completed simultaneously with forming the rotor core 742, and more specifically, with overmolding the magnets 746 to the rotor core 742. As such, the overmold housing 754, the motor fan 734, and the blower fan blades 782 may all be formed integrally together. Alternatively, the blower fan blades 782 may be formed separately from the overmold housing 754 and then be overmolded to the overmold housing 754. In such instances, the blower fan blades 782 may be molded to the overmold housing 754 before, while, or after the motor fan 734 is molded to the overmold housing 754.

In some embodiments, the blower fan blades 782 may be attached to the motor 714 with a snap-fit. In other embodiments, the blower fan blades 782 may be attached to the motor 714 with fasteners, such as screws, that secure the blades 782 to the overmold housing 754. In further embodiments, the blower fan blades 782 may be attached to the motor 714 with a press-fit. In yet further embodiments, the blower fan blades 782 may be attached to the motor 714 by gluing the blades 782 to the overmold housing 754. In even further embodiments, the blower fan blades 782 may be attached to the motor 714 through ultrasonic plastic welding.

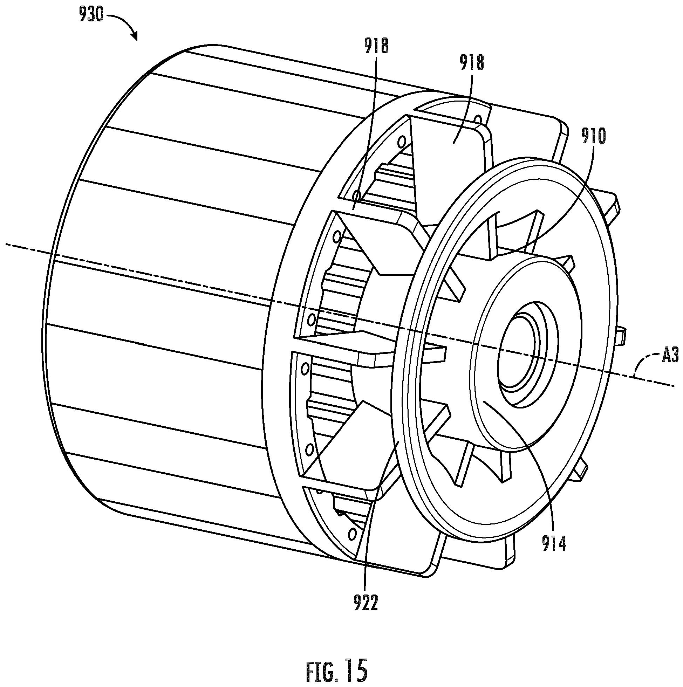

FIG. 15 illustrates another embodiment of a motor fan 910. The motor fan 910 may be used in place of the motor fan 534 for the motor 514 of FIG. 5 and/or may be used in place of the motor fan 734 for the motor 714 of FIG. 11. The motor fan 910 includes a hub 914, a plurality of fan blades 918, and a support 922 extending around a motor axis A3 at a position radially outward of the hub 914. The motor fan 910 is a centrifugal fan and does not include a sidewall at the radially outward ends of the fan blades 918. Rather, the fan blades 918 are coupled to a rotor core 926 at a forward end of the fan blades 918. As such, the motor fan 910 is configured to induce a flow of air centrifugally through a motor 930. That is, rotation of the motor fan 910 induces air to flow axially from a position forward of the motor 930 to reach the motor fan 910. The motor fan 910 may then exhaust the air radially outward from the motor fan 910. In the illustrated embodiment, all components of the motor 930 are encompassed within an outer diameter of the rotor.

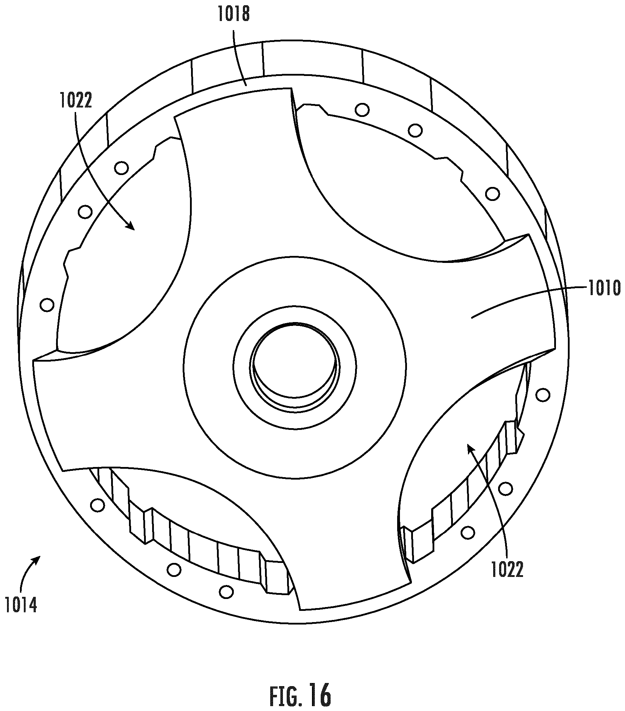

FIG. 16 illustrates an end cap 1010 for use with a motor 1014. As such, the end cap 1010 may be used in place of the motor fan 534 for the motor 514 of FIG. 5 and/or may be used in place of the motor fan 734 for the motor 714 of FIG. 11. In some embodiments, the end cap 1010 may be used with a motor fan. The end cap 1010 may be coupled to a rotor core 1018 and mounted to a rotor shaft (e.g., rotor shaft 522 of FIG. 5 or rotor shaft 722 of FIG. 7) such that the rotor core 1018 drives rotation of the rotor shaft through the end cap 1010. The end cap 1010 includes a plurality of vents 1022 that provides an opening for airflow to flow therethrough. As such, the motor 1014 does not include a dedicated fan for cooling the motor 1014. Rather, airflow induced by a blower assembly (e.g., the blower assembly 518 of FIG. 5 or the blower assembly 718 of FIG. 11) may flow through the vents 1022 and through the motor 1014 to cool the motor 1014. In the illustrated embodiment, all components of the motor 1014 are encompassed within an outer diameter of the rotor.

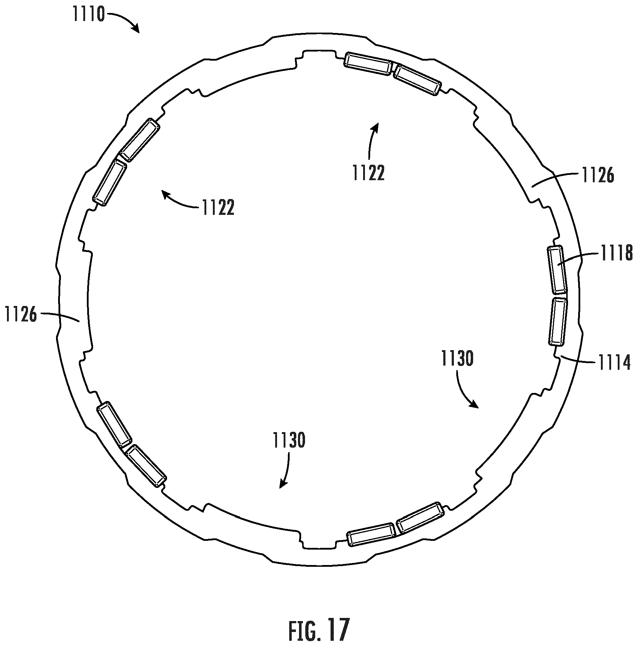

FIG. 17 illustrates a rotor 1110 according to another embodiment of the disclosure. The rotor 1110 may be used in place of the rotor 530 for the motor 514 of FIG. 5 and/or may be used in place of the rotor 730 for the motor 714 of FIG. 11. The rotor 1110 includes a rotor core 1114 and magnets 1118 attached to the rotor core 1114. In the illustrated embodiment, rotor core 1114 is formed from laminations as similarly described with respect to the rotor core 542 of FIGS. 6 and 7A. In other embodiments, the rotor core 1114 may be formed as a solid body (e.g., through machining or powder metallurgy). The magnets 1118 can be glued to an inner peripheral surface 1114a of the rotor core 1114 and form magnet poles 1122. The rotor core 1114 further includes steel attachments 1126 that form consequent poles 1130. Specifically, the rotor core 1114 alternates between magnet poles 1122 and consequent poles 1130. Including consequent poles 1130 enables a manufacturer to alter the performance metrics for a motor, as will be described further. In the illustrated embodiment, the rotor 1110 uses less magnetic material than a conventional rotor (e.g., 50% less magnetic material) without significantly affecting the performance of the associated motor.

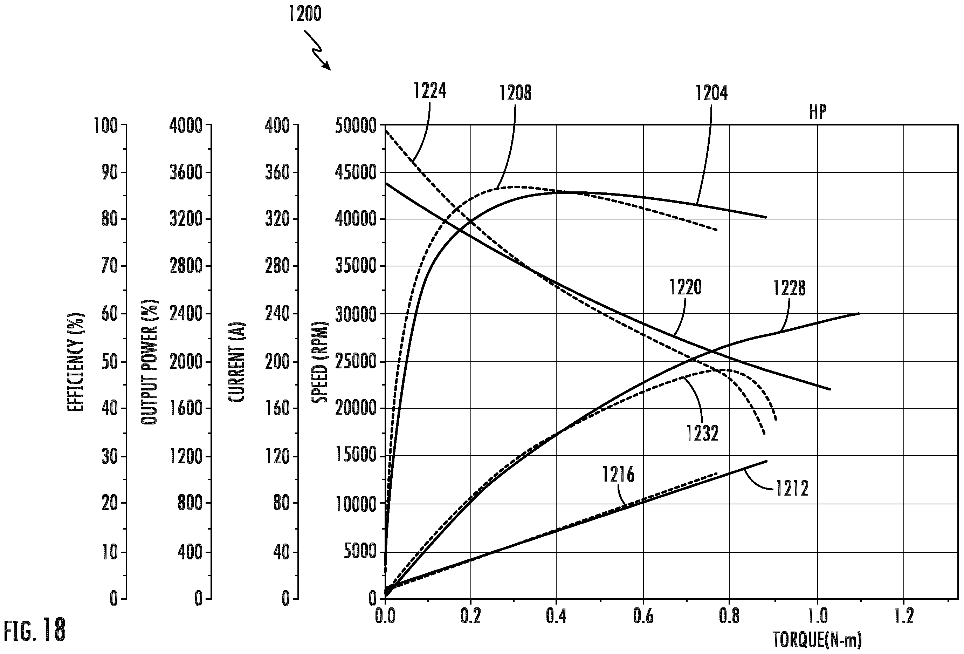

FIG. 18 is a graphical representation of efficiency, electrical current, speed in revolutions per minute ("RPM"), and output power in watts ("W") compared to torque outputs of a motor with conventional poles (e.g., the rotor 530 of FIG. 5 or the rotor 730 of FIG. 11) and a motor with consequent poles (e.g., the rotor 1110 of FIG. 17), in accordance with some embodiments. In some embodiments, the motor represented in graph 1200 is the motor of a core drill. The graph 1200 includes a representation of the efficiency of several different motors within the power tool 100. A curve 1204 illustrates an efficiency of a motor with a rotor having consequent poles, such as the rotor 1110 of FIG. 17. A curve 1208 illustrates an efficiency of a motor with a rotor having conventional poles, such as the rotor 530 of FIG. 5. In some embodiments, the curve 1204 is the efficiency of a motor with the rotor 1110 of FIG. 17 as torque values increase. In some embodiments, the curve 1208 is the efficiency of a motor with the rotor 530 of FIG. 5 as torque values increase. In some embodiments, the efficiency of the motor with the rotor 530 of FIG. 5 diminishes at a faster rate than the motor with the rotor 1110 of FIG. 17 for a given torque value.

Graph 1200 additionally includes a representation of the electrical current of several different motors within the power tool 100. A curve 1212 illustrates an electrical current of a motor with a rotor having consequent poles, such as the rotor 1110 of FIG. 17. A curve 1216 illustrates an electrical current of a motor with a rotor having conventional poles, such as the rotor 530 of FIG. 5. In some embodiments, the curve 1216 is the electrical current level of a motor with the rotor 1110 of FIG. 17 as torque values increase. In some embodiments, the curve 1216 is the electrical current of a motor with the rotor 530 of FIG. 5 as torque values increase. In some embodiments, as torque increases, the electrical current of both the motor with the rotor 1110 of FIG. 17 and the motor with the rotor 530 of FIG. 5 is approximately equal for a given torque value.

Graph 1200 additionally includes a representation of the RPM of several different motors within the power tool 100. A curve 1220 illustrates an RPM of a motor with a rotor having consequent poles, such as the rotor 1110 of FIG. 17. A curve 1224 illustrates an RPM of a motor with a rotor having conventional poles, such as the rotor 530 of FIG. 5. In some embodiments, the curve 1220 is the RPM level of a motor with the rotor 1110 of FIG. 17 as torque values increase. In some embodiments, the curve 1224 is the RPM of a motor with the rotor 530 of FIG. 5 as torque values increase. In some embodiments, as torque increases, the RPM of a motor with the rotor 530 of FIG. 5 starts at a higher level and then diminishes at a faster rate than the RPM of a motor with the rotor 1100 of FIG. 17 for a given torque value.

Graph 1200 additionally includes a representation of the output power, in Watts, of several different motors within the power tool 100. A curve 1228 illustrates an output power of a motor with a rotor having consequent poles, such as the rotor 1110 of FIG. 17. A curve 1232 illustrates an output power of a motor with a rotor having conventional poles, such as the rotor 530 of FIG. 5. In some embodiments, the curve 1228 is the output power level of a motor with the rotor 1110 of FIG. 17 as torque values increase. In some embodiments, the curve 1232 is the output power level of a motor with the rotor 530 of FIG. 5 as torque values increase. In some embodiments, as torque increases, the output power level of both the motor with the rotor 1110 of FIG. 17 and the motor with the rotor 530 of FIG. 5 is approximately equal for a given torque value until the torque value reaches approximately 0.5 N-m. After the torque value reaches 0. 5 N-m, the motor with the rotor 1110 of FIG. 17 begins to operate at a high output power level than the motor with rotor 530 of FIG. 5.

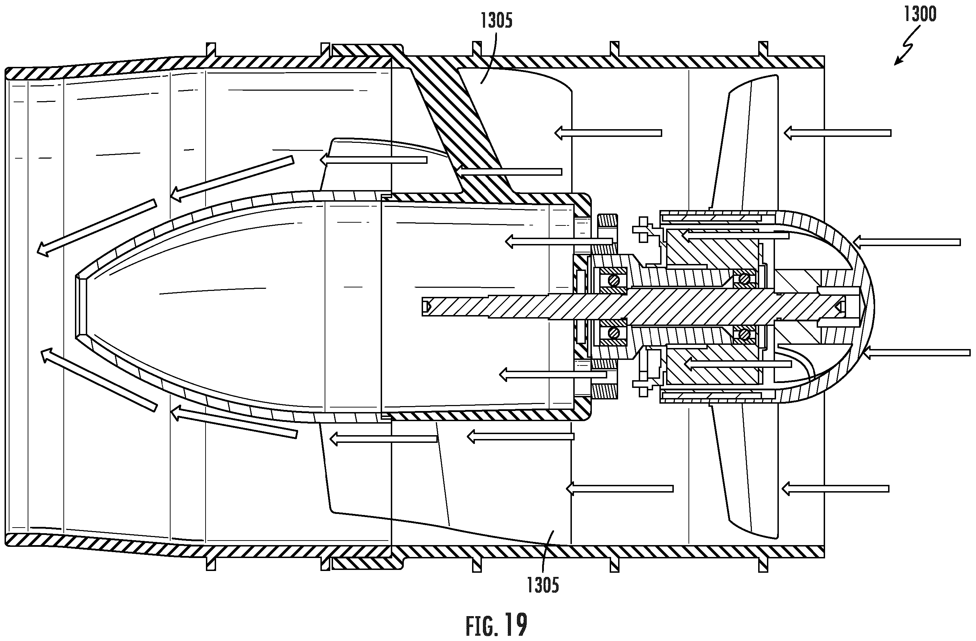

FIG. 19 illustrates the use of one of the motors 514, 714, 930 disclosed herein within a power tool 1300 (e.g., the power tool 100, a blower, etc.). The power tool 1300 includes stator blades 1305 that direct airflow generated by the motor 514, 714, 930 toward an output of the power tool 1300.

Although multiple embodiments of a drive unit are described herein with respect to multiple embodiments of motors and blower assemblies, it is understood that the motors described herein may be used with either of the blower assemblies, and the blower assemblies may be used with either of the motors. Further, any of the features described with respect to one of the motors may be combined with the other motors.

The motor and blower assembly constructions described herein advantageously allow a manufacturer to adjust frequency responses of the drive unit such as motor resonance and critical motor speed. For example, to adjust motor resonance, critical motor speed and other response of the motor, a manufacturer may alter any one of or any combination of the following group of features: cutouts in the rotor core geometry, add fins/anchors on the rotor core geometry, the motor fan blade geometry and/or the blower fan blade geometry, number of motor fan blades and/or the number of blower fan blades, number of magnets pairing, angular, radial, and axial offset between the fan blades (e.g., motor fan blades and/or blower fan blades) and the magnets, molding parameters for the overmolding processes (e.g., melt temperature, packing time, etc.), molding compound composition and glass fill content. As such, adjusting these parameters may extend the life of the drive unit by minimizing the load on rolling elements and fatigue sensitive components, minimize fan blade deflection to optimize aerodynamic performance, reduce noise and vibration.

The motor and blower assembly constructions described herein additionally advantageously enable the ability to correct rotor and fan imbalances in a single step. Specifically, the rotor and fan imbalances may be corrected by removing material or adding material through, for example, molding. The motor and blower constructions additionally enhance length and diametral compactness of the system. For example, by providing the blower fan blades on an outer surface of the overmold housing of the rotor, the compactness of the drive unit is enhanced.

The motor and blower assembly constructions additionally maximize aerodynamic performance. Specifically, the constructions maximize aerodynamic performance by minimizing the fan hub diameter which optimizes effective fan blade length within a given fan outer diameter. That is, the fan blades are longer relative to a conventional fan because the fan hub diameter is minimized. The constructions also maximize aerodynamic performance by streamlining the diameters of the motor and blower assembly. That is, for example, the diameter of the rotor 530 and the blower fan hub 582 of FIG. 5 may be equivalent to reduce/remove aerodynamic inefficiencies.

Although the disclosure has been described in detail with reference to certain preferred embodiments, variations and modifications exist within the scope and spirit of one or more independent aspects of the disclosure as described. Various features of the present disclosure are set forth in the following claims.

## Claims

1. A drive unit comprising:
a motor including:
a rotor shaft extending along an axis of rotation,
a stator mounted to the rotor shaft, and
a rotor at least partially surrounding the stator, the rotor having a rotor core, a plurality of magnets, and an overmold housing that couples the plurality of magnets to the rotor core to form poles having more than one magnet per pole; and
a blower assembly including a plurality of blower fan blades, the blower assembly configured to be driven by the motor.

2. The drive unit of claim 1, wherein the motor includes a motor fan, wherein the motor fan and the overmold housing are molded together, and wherein the motor fan couples the rotor to the rotor shaft.

3. The drive unit of claim 2, wherein the motor fan is an axial fan configured to induce a flow of air from behind the motor fan and is configured to blow the flow of air in a forward direction along the axis of rotation to cool the rotor shaft, the stator, and the rotor.

4. The drive unit of claim 2, wherein the motor fan is a centrifugal fan configured to induce a flow of air from in front of the motor fan such that the flow of air travels past and cools the rotor shaft, the stator, and the rotor before reaching the motor fan, and wherein the motor fan is configured to exhaust the flow of air radially outward from the motor fan.

5. The drive unit of claim 1, wherein the motor includes an end cap that couples the rotor shaft to the rotor shaft, and wherein the end cap has a plurality of vents such that the blower assembly is configured to induce a flow of air through the plurality of vents for cooling the rotor shaft, the stator, and the rotor.

6. The drive unit of claim 1, wherein the blower assembly includes a blower fan and a bushing that is insert molded to the blower fan, and the wherein the bushing is positioned at least partially between the blower fan and the rotor shaft.

7. The drive unit of claim 1, wherein the blower assembly includes a blower fan and a lock ring, and wherein lock ring inhibits the blower fan from moving along the rotor shaft.

8. A drive unit comprising:
a motor including:
a rotor shaft extending along an axis of rotation,
a stator mounted to the rotor shaft, and
a rotor at least partially surrounding the stator, the rotor configured to be driven by the stator, the rotor coupled to the rotor shaft to drive rotation of the rotor shaft about the axis of rotation; and
a blower assembly including a plurality of blower fan blades extending radially outward from an outer surface of the motor.

9. The drive unit of claim 8, wherein the rotor further includes an overmold housing, and the blower fan blades are formed integrally with the overmold housing.

10. The drive unit of claim 8, wherein the blower fan blades are removable from the outer surface of the motor.

11. The drive unit of claim 10, wherein the blower fan blades are attached to the outer surface of the motor with fasteners.

12. The drive unit of claim 8, wherein the rotor includes a rotor core, a plurality of magnets, and an overmold housing that secures the plurality of magnets relative to the rotor core, and wherein the overmold housing defines a plurality of windows adjacent to the plurality of magnets such that at least a portion of each of the plurality of magnets is exposed to the stator.

13. The drive unit of claim 12, wherein the motor further includes a motor fan, and wherein both the motor fan and the blower fan blades are integrally formed with the overmold housing.

14. The drive unit of claim 8, wherein:
the rotor includes a rotor outer diameter; and
all components of the motor are encompassed within the rotor outer diameter.

15. A method of manufacturing a drive unit, the method comprising providing a rotor shaft and a stator mounted to the rotor shaft;
forming a rotor core;
positioning the stator within the rotor core after the rotor core is formed;
attaching the rotor core to the rotor shaft; and
attaching a blower assembly to one of the rotor shaft and the rotor core.

16. The method of claim 15, wherein the forming the rotor core includes providing a plurality of laminations, each lamination including a protruding part and a gap formed by the protruding part, and wherein the forming the rotor core further includes stacking the plurality of laminations such that the protruding part of each lamination is inserted into the gap of an adjacent lamination to interlock the laminations together.

17. The method of claim 15, wherein the forming the rotor core includes overmolding a plurality of magnets onto a body of the rotor core such that an overmold housing is formed and the overmold housing secures the plurality of magnets to relative to the body of the rotor core.

18. The method of claim 17, wherein the forming the rotor core includes forming a motor fan through overmolding and attaching the motor fan to the overmold housing.

19. The method of claim 18, wherein the motor fan and the overmold housing are formed from the same overmold process.

20. The method of claim 18, wherein the motor fan and the overmold housing are formed from separate overmold processes.

21. The method of claim 17, wherein the attaching the blower assembly to the one of the rotor shaft and the rotor core includes forming the blower assembly during the same overmolding as the overmold housing such that the blower assembly and the overmold housing are overmolded together.
